# EUROPÄISCHE PATENTSCHRIFT

(11) **EP 0 904 905 B1**
(45) Veröffentlichungstag und Bekanntmachung des Hinweises auf die Patenterteilung: **23.07.2003**
(21) Anmeldenummer: 98117724.9
(22) Anmeldetag: 18.09.1998
(51) Int. Cl.: B27K 3/52

(54) **Holzschutzmittel und Verfahren zum Holzschutz**
Composition and process for wood treatment
Composition et procédé pour le traitement tu bois

(30) Priorität: 29.09.1997 DE 19742985
(43) Veröffentlichungstag der Anmeldung: 31.03.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: Bruhn, Sieglinde, 38120 Braunschweig (DE); Gunschera, Jan Friedrich Dr.rer.nat., 38102 Braunschweig (DE)

(56) Entgegenhaltungen:
- GB-A- 596 801
- US-A- 4 180 412

## Beschreibung

Die Erfindung betrifft ein neuartiges vorbeugendes Holzschutzmittel auf der Basis eines Tierblutserums/-Metallkomplexes und ein entsprechendes Verfahren zum Holzschutz gegen holzzerstörende Basidiomyceten.

Herkömmliche Holzschutzmittel auf der Basis von Metallionen liegen entweder in Form anorganischer Salze vor, welche bei zahlreichen Anwendungen mit Chrom-VI-Verbindungen fixiert werden müssen, die als toxisch und canzerogen eingestuft werden. Darüber hinaus werden mit N-Cyclohexyldiazeniumdioxid (HDO) komplexierte Metallionen eingesetzt, wobei aufgrund schlechter Lösungseigenschaften der Einsatz in Holzschutzmitteln auf Wasserbasis erschwert wird. Nachteilig kommt hinzu, daß diese Holzschutzmittel hohe Herstellungskosten aufweisen. Ein Überblick über gängige Holzschutzmittel ist dem RÖMPP Chemielexikon, Band 3, 9. Auflage, ab Seite 1836, zu entnehmen.

Nachteilig bei all diesen Holzschutzmitteln ist es jedoch, daß sie entweder teuer in der Herstellung oder aus toxikologisch bedenklichen Wirkstoffen aufgebaut sind.

US-A-4 180 412 beschreibt die Verwendung von koagolationsgehämmtem Vollblut als Leim für Celluloseprodukte. GB-A-596 801 Beschreibt die Verwendung von Vollblut für die Härtung und/oder Konditionierung vom Holz.

Ausgehend hiervon, ist es die Aufgabe der vorliegenden Erfindung, ein Holzschutzmittel anzugeben, das billig in der Herstellung ist und aus toxikologisch und cancerogen unbedenklichen Bestandteilen aufgebaut ist. Eine weitere Aufgabe der Erfindung ist es, ein Verfahren zum vorbeugenden Holzschutz gegen holzzerstörende Basidiomyceten anzugeben.

Die Erfindung wird in bezug auf das Holzschutzmittel durch die kennzeichnenden Merkmale des Anspruches 1 gelöst. Die Unteransprüche zeigen vorteilhafte Weiterbildungen auf. Das Verfahren zum Holzschutz ist durch die Merkmale des Anspruches 6 gekennzeichnet.

Gemäß der Erfindung wird vorgeschlagen, ein Holzschutzmittel enthaltend 80 bis 99,5 Gew.-% Tierblutserum und 0,5 bis 20 Gew.-% Metallsalz einzusetzen. Es hat sich nämlich überraschenderweise gezeigt, daß Tierblutserum, das aus frischem Tiervollblut gewonnen wird, in Verbindung mit Metallsalzen Metallionenkomplexe ausbildet und einen ausgezeichneten Holzschutz gewährleistet. Vorteilhaft beim erfindungsgemäßen Holzschutzmittel ist, daß eine homogene Schicht entsteht, die eine geringe Tendenz zur Auswaschung mit Wasser besitzt und die gleichzeitig eine überraschend hohe Fixierung an die Holzmatrix aufweist, so daß sie sich nur sehr schwer entfernen läßt. Erwähnenswert beim erfindungsgemäßen Holzschutzmittel ist ferner, daß im Gegensatz zur Verwendung von Tiervollblut nur ein geringfügige Verfärbung des Holzes eintritt. Weiter vorteilhaft beim erfindungsgemäßen Holzschutzmittel ist, daß die nicht benötigten Restsubstanzen problemlos entsorgt werden können und die Herstellung der Komplexe ohne Energieaufwand möglich ist. Beim erfindungsgemäßen Holzschutzmittel ist weiterhin keine Belastung der Umwelt durch Ausgasung bzw. Diffusion zu erwarten. Da aufgrund der großen Verfügbarkeit von Tierblut die Herstellung der Grundsubstanzen, nämlich des Tierblutserums, kostengünstig und problemlos ist, steht ein billiges Holzschutzmittel zur Verfügung.

Wesentlich beim erfindungsgemäßen Holzschutzmittel ist, daß ein Tierblutserum eingesetzt wird, das Nahrungsmittelqualität besitzt und dem keine Antigerinnungsmittel zugesetzt sind. Das Tierblutserum muß sofort nach Herstellung konserviert bzw. stabilisiert werden, damit sich nicht schon im Tierblutserum Keime ausbilden, die sich dann für den späteren Holzschutz negativ auswirken. Eine derartige Stabilisierung bzw. Konservierung ist problemlos durchführbar und im Stand der Technik bekannt. Die Stabilisierung kann z.B. mit NaCl durchgeführt werden. NaCl wird bereits seit langer Zeit erfolgreich als Konservierungsmittel zum Schutz von tierischem und pflanzlichem Protein vor Mikroorganismen (Pökelfleisch u.a.) eingesetzt.

Zur Herstellung des Tierblutserums ist es lediglich erforderlich, daß Tiervollblut zentrifugiert oder so lange stehengelassen wird, bis sich das Serum absetzt. Bevorzugt wird Tierblutserum aus Rindervollblut oder Schweinevollblut gewonnen. In Versuchen hat es sich als besonders vorteilhaft erwiesen, wenn Rindervollblut verwendet wird, da bei Schweineblut ein erheblich höherer Zuckergehalt im Blut vorhanden ist. Zucker ist der primäre Nährstoff der holzzerstörenden Pilze und wird auch von pilzeigenen Enzymsystemen über die Kettenspaltung der holzeigenen Cellulose zur Verfügung gestellt. Vorteilhaft ist deshalb Rinderserum einzusetzen. Rinderserum steht zudem in großen Mengen zur Verfügung.

Bei den Metallsalzen ist es bevorzugt, diese in einer Menge von 0,6 bis 4 % einzusetzen. Erfindungsgemäß werden Ti, V, Mn, Fe, Co, Ni, Cu, Zn, Al, Mo und/oder Ag eingesetzt, besonders bevorzugt werden Eisen, Kupfer oder Aluminiumsalze oder deren Mischungen verwendet.

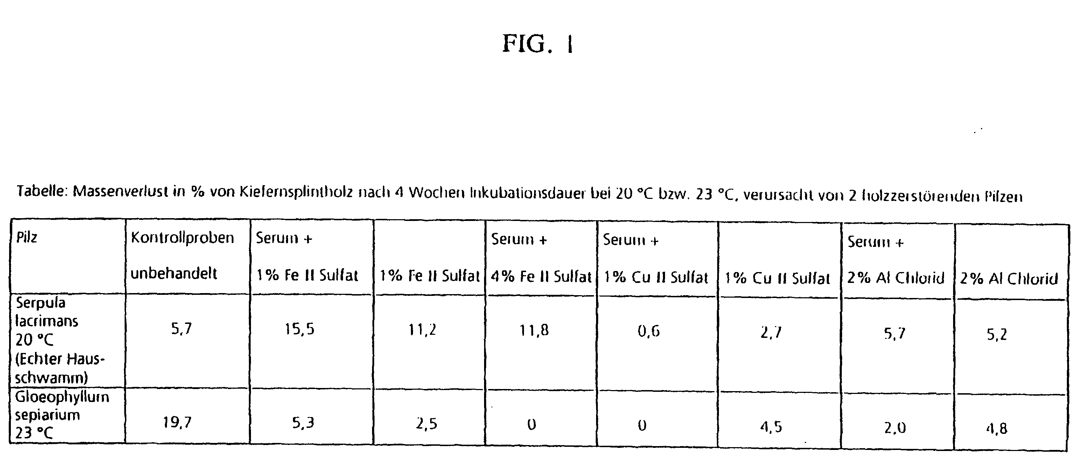

Die Erfindung wird nachfolgend anhand der Figur 1 näher erläutert.
Figur 1 zeigt verschiedene Serum-Metall-Komplexe und den Massenverlust in % von Kiefernsplintholz nach vier Wochen Inkubationsdauer bei 20 bzw. 23 °C, verursacht von zwei holzzerstörenden Pilzen.

## Patentansprüche

1. Holzschutzmittel, enthaltend 80 bis 99,5 Gew.-% Tierblutserum und 0,5 bis 20 Gew.-% eines Metallsalzes, ausgewählt aus Salzen von Ti, V, Mn, Fe, Co, Ni, Cu, Zn, Al, Mo oder Ag oder deren Mischungen.

2. Holzschutzmittel nach Anspruch 1, **dadurch gekennzeichnet, daß** das Tierblutserum Nahrungsmittelqualität aufweist.

3. Holzschutzmittel nach Anspruch 1 oder 2, **dadurch gekennzeichnet, daß** das Tierblutserum aus Schweinevollblut oder Rindervollblut gewonnen worden ist.

4. Holzschutzmittel nach mindestens einem der Ansprüche 1 bis 3, **dadurch gekennzeichnet, daß** 0,6 bis 4 % Metallsalz enthalten sind.

5. Holzschutzmittel nach mindestens einem der Ansprüche 1 bis 4, **dadurch gekennzeichnet, daß** die Metallsalze ausgewählt sind aus Salzen von Fe, Cu und/oder AL.

6. Verfahren zum vorbeugenden Holzschutz gegen den Abbau und die Zerstörung von Holz ohne Erdkontakt durch Basidiomyceten, **dadurch gekennzeichnet, daß** Holz mit einem Holzschotzmittel gemäß Anspruch 1 behandelt wird.

## Claims

1. Wood preservative containing 80 to 99.5% by weight of animal blood serum and 0.5 to 20% by weight of a metal salt selected from amongst salts of Ti, V, Mn, Fe, Co, Ni, Cu, Zn, Al, Mo or Ag, or their mixtures.

2. Wood preservative according to Claim 1,
**characterized in that** the animal blood serum is food-grade animal blood serum.

3. Wood preservative according to Claim 1 or 2, **characterized in that** the animal blood serum has been obtained from whole pigs' blood or whole bovine blood.

4. Wood preservative according to at least one of Claims 1 to 3, **characterized in that** the metal salt amounts to 0.6 to 4%.

5. Wood preservative according to at least one of Claims 1 to 4, **characterized in that** the metal salts are selected from amongst salts of Fe, Cu and/or Al.

6. Process for the preventative protection of wood against the degradation and destruction by Basidiomycetes of wood which is not in contact with the soil, **characterized in that** wood is treated with a wood preservative according to Claim 1.

## Revendications

1. Composition, contenant 80 à 99,5 % en poids de sérum de sang animal et 0,5 à 20 % en poids d'un sel métallique, choisi parmi les sels de Ti, V, Mn, Fe, Co, Ni, Cu, Zn, Al, Mo ou Ag ou leurs mélanges.

2. Composition pour le traitement du bois selon la revendication 1, **caractérisée en ce que** le sérum de sang animal présente une certaine qualité de denrées alimentaires.

3. Composition selon la revendication 1 ou 2, **caractérisée en ce que** le sérum de sang animal est obtenu à partir de sang complet de porc ou de sang complet de boeuf.

4. Composition selon au moins l'une des revendications 1 à 3, **caractérisée en ce qu'**elle contient 0,6 à 4 % de sel métallique.

5. Composition selon au moins l'une des revendications 1 à 4, **caractérisée en ce que** les sels métalliques sont choisis parmi Fe, Cu et/ou Al

6. Procédé pour le traitement préventif du bois contre la décomposition et la destruction de bois sans contact avec la terre, par les basidiomycètes, **caractérisé en ce que** le bois est traité par une composition selon la revendication 1.
